# EUROPEAN PATENT APPLICATION

(11) **EP 1 749 787 A2**
(43) Date of publication of application: **07.02.2007**
(21) Application number: 06113827.7
(22) Date of filing: 11.05.2006
(51) Int. Cl.: B66C 19/00, B60K 7/00

(54) **Drive machinery for large carrier of tyre type container crane**

(30) Priority: 05.08.2005 CN 200520044098 U
(71) Applicant: Shanghai Zhenhua Port Machinery Co., Ltd., 200125 Shanghai (CN)
(72) Inventor: Tian, Hong, 200125 Shanghai (CN); He, Gang, 200125 Shanghai (CN); Pei, Baoren, 200125 Shanghai (CN); Liu, Guangyu, 200125 Shanghai (CN)
(74) Representative: Modiano, Micaela Nadia

(57) **Abstract**

The invention provides a drive machinery for large carrier of tyre type container crane, comprising several groups being arranged at corresponding positions of the large carrier, each group drive machinery includes a wheel bracket (1) mounted on the large carrier frame, wheels (2) mounted on the wheel bracket, and a motor (3) and a reductor (4) providing the power to the wheel, each group of the drive machinery further includes, a wheel side brake (5), said reductor is embedded into a side of the wheel bracket and becomes a part of the wheel bracket, the output shaft of the reductor is connected and integrated to the drive shaft of the wheel; said motor is mounted at the upper part of the wheel bracket, and the output shaft of the motor is connected and integrated to the input shaft of the reductor; said wheel side brake is mounted in the hub (6) of the wheel, and the wheel side brake is connected to hydraulic pipes so that the braking is carried out by the hydraulic drive. The braking machinery for the large carrier of the tyre type container crane according to the invention, the structure is simplified, the running is more smooth, and the braking effect is better, therefore the operation efficiency of the container crane is increased significantly and its life is prolonged evidently, it has the very large practical value and the very large economical benefit.

## Description

### Field of invention

The invention generally relates to a loading/unloading and transportation of containers, more particularly, to a drive machinery for large carrier of tyre type container crane.

### Background of invention

The drive machinery for large carrier of tyre type container crane is an important component of the container crane. The conventional drive machinery for the large carrier of the tyre type container carne is chain type drive machinery, i.e. a coupling is driven by the motor, a reductor is driven by the coupling, and the wheels are driven by the chain so that the drive machinery has the complicated structure and occupies large space, moreover the life of the chain is short, therefore the life of the whole drive system is also short, and the operation efficiency of the tyre type container crane is affected adversely.

### Summary of invention

It is an object of the invention to provide a new structure of the large carrier drive machinery for the tyre type container came which can overcome said problems of the prior art.

According to one aspect of the invention, a drive machinery for large carrier of tyre type container crane is provides, said drive machinery comprises several groups being arranged at corresponding positions of the large carrier, each group drive machinery includes a wheel bracket mounted on the large carrier frame, wheels mounted on the wheel bracket, and a motor and a reductor providing the power to the wheel, each group of the drive machinery further includes, a wheel side brake, said reductor is embedded into a side of the wheel bracket and becomes a part of the wheel bracket, the output shaft of the reductor is connected and integrated to the drive shaft of the wheel; said motor is mounted at the upper part of the wheel bracket, and the output shaft of the motor is connected and integrated to the input shaft of the reductor; said wheel side brake is mounted in the hub of the wheel, and the wheel side brake is connected to hydraulic pipes so that the braking is carried out by the hydraulic drive.

The drive machinery for large carrier of tyre type container crane according to the invention, the motor is directly connected to the reductor, the reductor and the wheel bracket are connected and integrated asone unit, the output shaft of the reductor and the drive shaft of the wheel are connected and integrated as one unit. Then the coupling and the drive shaft are omitted so that the structure of the large carrier drive machinery is simplified, the arrangement is more reasonable, the appearance is more beautiful, and the life is longer.

### Brief description of appended drawing

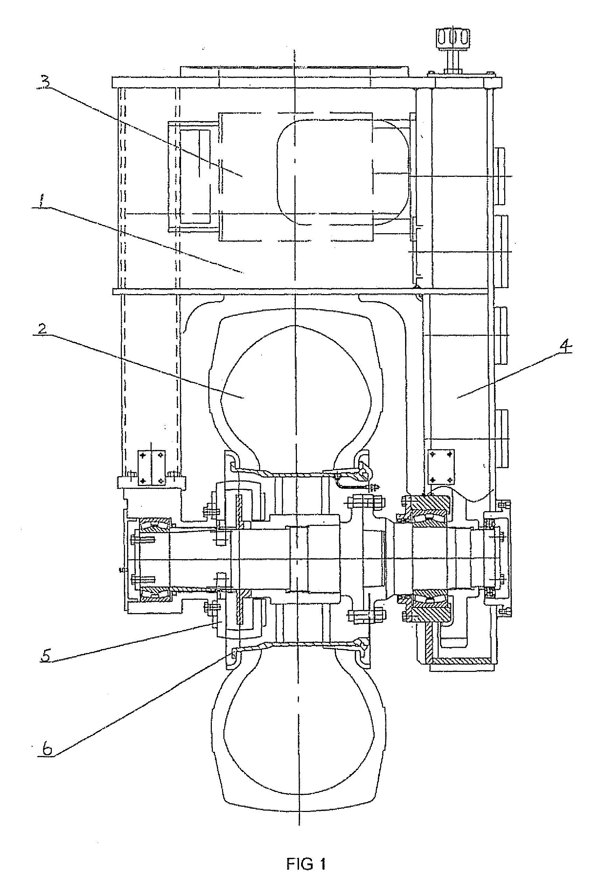

Figure 1 is the schematic structure view of the drive machinery for the large carrier of the type container crane according to the invention.

### Retailed description of preferred embodiment

With reference to figure 1, the drive machinery for the large carrier of the type container crane according to the invention comprises several groups arranged at the corresponding positions of the large carrier , each group includes a wheel bracket 1, wheels 2, a motor 3, a reductor 4, and a wheel side brake 5. The wheel bracket 1 is mounted on the large carries frame, the wheel 2 is mounted at the low member of the wheel bracket 1, the motor 3 is mounted at the upper member of the wheel bracket 1, the reductor 4 is embedded into a side of the wheel bracket 1 and becomes a member of the wheel bracket, the box body structure is a component of the reductor 4 and is a component of the wheel bracket 1 also. The input shaft (high speed shaft) of the reductor 4 is connected to the output shaft of the motor 3 and integrated as one unit, the output shaft (low speed shaft) of the reductor 4 is connected to the drive shaft of the wheel 2 and integrated as one unit in order to drive the wheel, the wheel side brake 5 is arranged in the hub 6 of the wheel 2, and the wheel side brake 5 in connected to the hydraulic pipe so that the braking of the wheel is carried out by the hydraulic drive.

The drive machinery for the large carrier of the tyre type container crane in the embodiment of the invention has four groups, each group is provided at one of the four corners of the large carrier of the crane respectively, the running and stop of the large carrier are performed by the four wheels so that the structure is simplified, the running is more smooth, and the braking effect is better, therefore the operation efficiency of the container crane is increased significantly and its life is prolonged evidently, it has the very large practical value and the very large economical benefit.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A drive machinery for large carrier of tyre type container crane, comprising several groups being arranged at corresponding positions of the large carrier, each group drive machinery includes a wheel bracket mounted on the large carrier frame, wheels mounted on the wheel bracket, and a motor and a reductor providing the power to the wheel, wherein,
each group of the drive machinery further includes,
a wheel side brake, said reductor is embedded into a side of the wheel bracket and becomes a part of the wheel bracket, the output shaft of the reductor is connected and integrated to the drive shaft of the wheel; said motor is mounted at the upper part of the wheel bracket, and the output shaft of the motor is connected and integrated to the input shaft of the reductor; said wheel side brake is mounted in the hub of the wheel, and the wheel side brake is connected to hydraulic pipes so that the braking is carried out by the hydraulic drive.
